**Europäisches Patentamt**

**European Patent Office**

**Office européen des brevets**

(19)

(11) Veröffentlichungsnummer: **0 100 435 B1**

# EUROPÄISCHE PATENTSCHRIFT

(12)

(45) Veröffentlichungstag der Patentschrift:
29.11.89

(21) Anmeldenummer: 83106321.9

(22) Anmeldetag: 29.06.83

(51) Int. Cl.⁴: **B 23 B 45/02, B 23 Q 15/00, H 02 P 5/40**

(54) Elektrische Motorregelung.

(30) Priorität: 29.07.82 DE 3228303

(43) Veröffentlichungstag der Anmeldung:
15.02.84 Patentblatt 84/7

(45) Bekanntmachung des Hinweises auf die Patenterteilung:
29.11.89 Patentblatt 89/48

(84) Benannte Vertragsstaaten:
DE FR GB

(56) Entgegenhaltungen:
EP-A- 0 018 465
EP-A- 0 034 822
DD-A- 157 172
US-A- 4 307 325
US-A- 4 317 176

(73) Patentinhaber: ROBERT BOSCH GMBH, Postfach 50,
D-7000 Stuttgart 1 (DE)

(72) Erfinder: Hornung, Friedrich, Dipl.-Ing., Am
Ochsenwald 10A, D-7000 Stuttgart 80 (DE)
Erfinder: Schädlich, Fritz, Dipl.-Ing., Panoramastrasse 4,
D-7022 Leinfelden-Echterdingen (DE)

## Beschreibung

### Stand der Technik

Die Erfindung geht aus von einer elektrisch betriebenen Bohrmaschine mit einer Regeleinrichtung zur Regelung des Antriebs der Bohrmaschine nach der Gattung des Hauptanspruchs. Bekannte Regeleinrichtungen für Bohrmaschinen greifen das Drehzahlsignal am Motor ab. Der Regler bestimmt die Drehzahl der Bohrmaschine. Ist dem Motor ein Getriebe nachgeschaltet, so ist die Abtriebsdrehzahl zusätzlich abhängig von der Getriebeübersetzung. Die Drehzahl ist auf zwei Arten veränderbar: durch die Einstellung des Reglers und des Getriebes. Die doppelte Stellmöglichkeit kompliziert das Auffinden der richtigen Drehzahl und erschwert die Lesbarkeit von Material-Drehzahltabellen. Wird z.B. um ein höheres Moment zu erreichen, eine andere Übersetzung gewählt, so ist ein Nachstellen des Reglers notwendig, um die gleiche Abtriebsdrehzahl zu erhalten. Dies ist dann nachteilig, wenn durch die Umschaltung des Getriebes lediglich eine Anpassung des Lastmomentes an das Motordrehmoment erzielt werden soll.

Aus der DE-C-820 922 ist eine Belastungskontroll- und Regelvorrichtung an Werkzeugmaschinen bekannt, bei der mittels eines von der Arbeitsspindel angetriebenen Generators eine der Drehzahl proportionale Spannung erzeugt wird. Auf einem Anzeigeinstrument wird ein Wert angezeigt, der dem Durchmesserwert des zu bearbeitenden Werkstückes entspricht. Aus dem ebenfalls angezeigten momentanen Belastungsgrad der Maschine und dem angezeigten Durchmesserwert muß der Bediener die geeignete Drehzahl der Maschine wählen und einstellen, was bei Belastungswechsel häufig zu ungünstigen Betriebsbedingungen bzw. Fehleinstellungen führt.

In der EP-A1-0 018 465 wird eine Drehzahlsteuerung für Elektrohandwerkzeuge vorgeschlagen, bei der eine Drehzahleinstellung des Motors in Abhängigkeit vom Bohrdurchmesser erfolgt. Hier wirkt ein mechanischer Stößel, der durch die Abtriebswelle geführt ist, auf einen Drehzahlsteller ein, wodurch die Drehzahl des Antriebsmotors in Abhängigkeit vom Bohrdurchmesser gesteuert wird. Mit dieser Schaltungsanordnung ist die Drehzahl nicht zu erfassen und bei Maschinen mit schaltbarem Getriebe nicht verwendbar, da keine Berücksichtigung des eingelegten Getriebeganges vorgesehen ist.

Die US-A-4 317 176 zeigt eine rechnergesteuerte Ständerbohrmaschine mit einem schaltbaren Getriebe, bei der eine Änderung des eingelegten Ganges dem Rechner mitgeteilt wird, so daß er dies für seine Berechnungen berücksichtigen kann. Diese Schaltungsanordnung ist für Elektrowerkzeuge wenig geeignet und sehr aufwendig aufgebaut, da neben einem Sensor zur Erfassung der Motordrehzahl ein zweiter Sensor zur Erfassung der Getriebeschaltstellung erforderlich ist.

In der am gleichen Tag angemeldeten EP-A2-0 099 992 ist ein Sensor beschrieben, der mit dem Spannfutter gekoppelt ist. Gegenstand der Anmeldung ist es, die Drehzahl einer Bohrmaschine in Abhängigkeit von der Öffnung des Spannfutters zu steuern.

### Vorteile der Erfindung

Die erfindungsgemäße Bohrmaschine mit den kennzeichnenden Merkmalen des Hauptanspruchs hat demgegenüber den Vorteil, daß die Drehzahl nicht auf der Antriebsseite des Getriebes sondern auf der Abtriebsseite des Getriebes erfaßt wird. Wechselt die Getriebeübersetzung, dann wird dies vom Regler als Störgröße erkannt und ausgeregelt. Das Umschalten des Getriebes hat keinen Drehzahlsprung zur Folge. Bei einem Gangwechsel läuft nicht die Arbeitsspindel schneller oder langsamer sondern der Antriebsmotor. Die bisher zwangsläufige Kopplung von Drehzahl- und Drehmomentwandlung im Getriebe ist damit aufgehoben. Das Getriebe dient jetzt ausschließlich zur Anpassung des Lastmoments an das Motordrehmoment, die Drehzahl wird allein vom Regler bestimmt. Damit wird die Bedienung von der elektronischen Maschine einfacher und Gangtabellen werden einfacher oder können entfallen.

Durch die in den Unteransprüchen aufgeführten Maßnahmen sind vorteilhafte Weiterbildungen und Verbesserungen der im Hauptanspruch angegebenen Regelvorrichtung möglich. Besonders vorteilhaft ist es, wenn die Gebereinrichtungen in oder am Bohrfutter angebracht sind. Durch diese Maßnahme läßt sich auf besonders einfache Art und Weise die Abtriebsdrehzahl aufnehmen. Als weiterer Vorteil dieser Anordnung ist anzusehen, daß gleichzeitig weitere Größen, beispielsweise der Durchmesser der Bohrer am Bohrfutter erkannt werden können. Günstig ist es auch, die Gebereinrichtung an einem Kupplungsstück auf der Abtriebsseite der Werkzeugmaschine anzuordnen. Als Drehzahlgeber sind bereits bekannte Zahnradgeber einsetzbar. Als Vorteil dieser Anordnung ist anzusehen, daß die Gebervorrichtung im geschlossenen Werkzeuggehäuse anbringbar ist und vor Verschmutzungen und Schäden geschützt ist. Eine besonders einfache Ausgestaltung des Drehzahlgebers ist durch einen induktiven Signalaufnehmer möglich. Weitere vorteilhafte, betriebssichere und kostengünstige Ausgestaltungen der Erfindung ergeben sich aus den Ansprüchen, der Beschreibung und der Zeichnung.

### Zeichnung

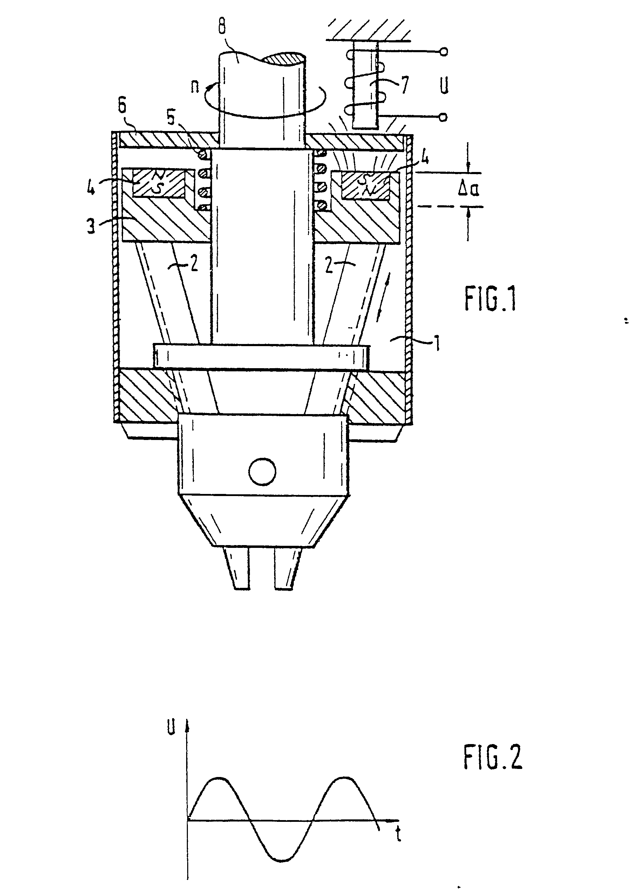

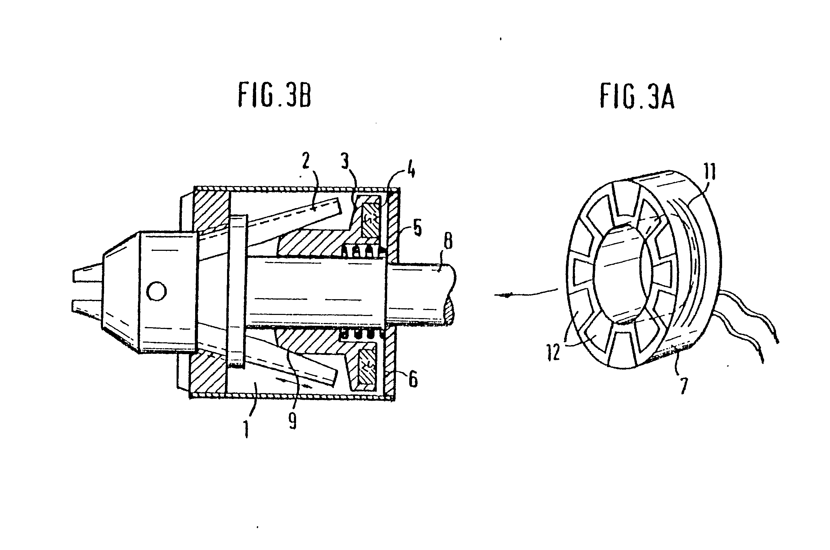

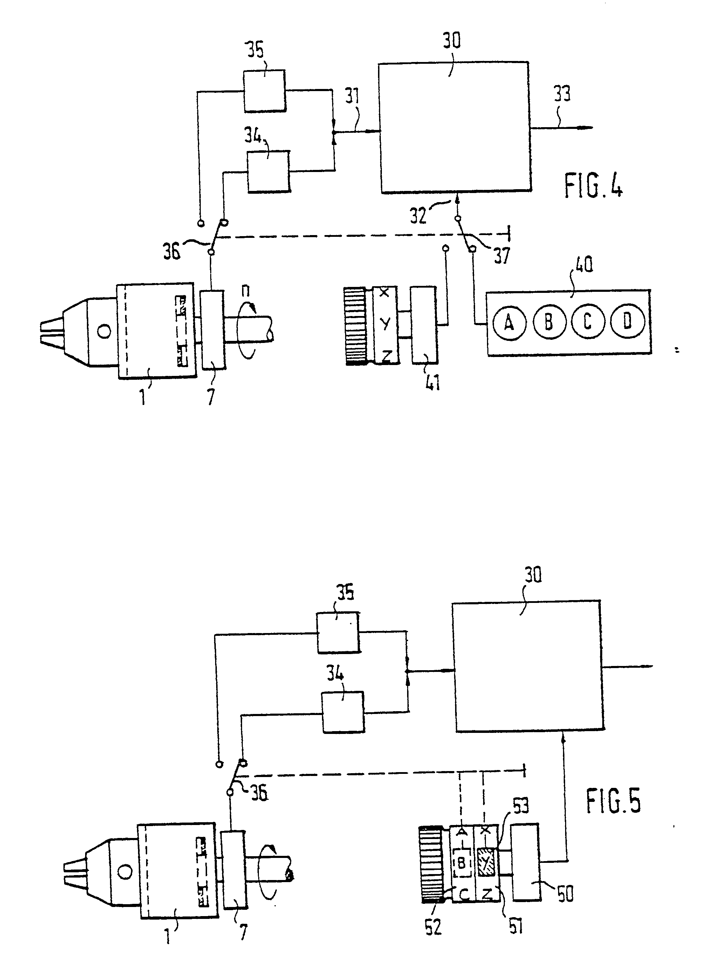

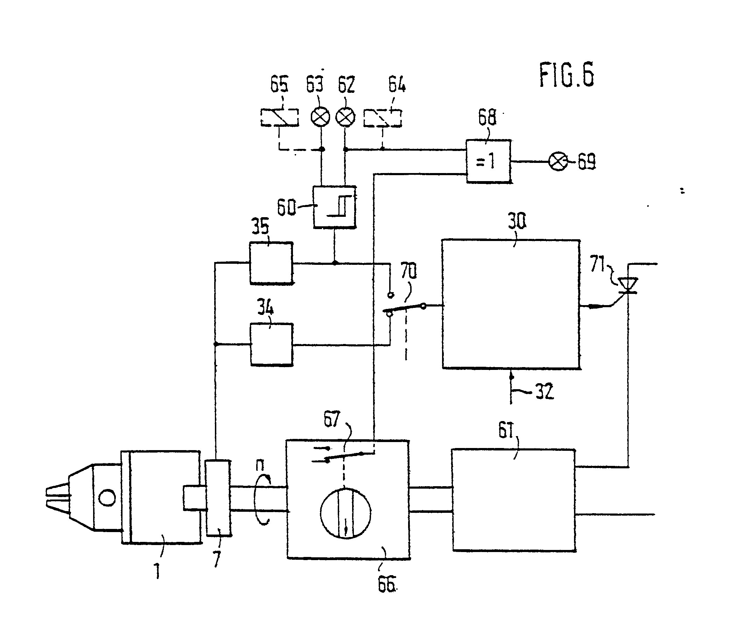

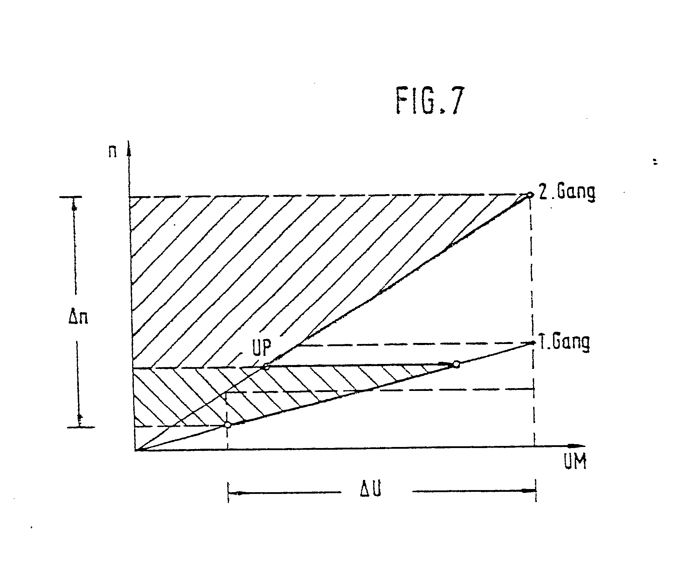

Ausführungsbeispiele der Erfindung sind in der Zeichnung dargestellt und in der nachfolgenden Beschreibung näher erläutert. Es zeigen Figur 1 ein Spannfutter mit einem Drehzahlgeber, mit dem gleichzeitig der Bohrerdurchmesser erfaßbar ist, Figur 2 das Ausgangssignal am Signalaufnehmer, Figur 3 ein weiteres Ausführungsbeispiel eines als Spannfutter ausgebildeten Drehzahlgebers, Figur 4 eine elektrische Regelschaltung für eine Bohrmaschine, Figur 5 ein weiteres Ausführungsbeispiel einer elektrischen Regelschaltung für eine Bohrmaschine, Figur 6 ein drittes Ausführungsbeispiel einer Regeleinrichtung für eine Bohrmaschine und Figur 7 ein Diagramm zur Erläuterung der Funktionsweise der Anordnung nach Figur 6.

Beschreibung der Ausführungsbeispiele

Bohrmaschinen, die mit einer guten elektronischen Regelung ausgerüstet sind, gestatten die Einstellung und Nutzung der Drehzahl in weiten Grenzen ohne Gangumaschaltung. In vielen Fällen wird der Nutzungsbereich der Bohrmaschine erweitert, in dem ein mechanisches Getriebe vorgesehen ist. Soll nun mit dem Werkzeug verschiedene Werkstücke mit verschiedenen Bohrdurchmessern bearbeitet werden, so ist meist durch Tabellen angegeben, welche Drehzahl einzustellen ist. Weist die Bohrmaschine mehrere Gänge auf, so weisen die bekannten Tabellen mehrere Aufgaben auf, welche Drehzahl bei welchem Gang einzustellen ist. Erfahrungsgemäß wird die korrekte Drehzahl-Gang-Kombination selten richtig eingestellt. Die Folge ist, daß entweder das Bohrwerkzeug beispielsweise durch Ausglühen beschädigt wird oder daß der Arbeitsfortschritt und das Arbeitsergebnis zu wünschen übrig lassen. Der Grundgedanke ist nunmehr, das Regelsignal für den Regelverstärker auf der Abtriebsseite des Getriebes z.B. an der Arbeitsspindel abzunehmen, wodurch die Drehzahl an der Arbeitsspindel auch bei unterschiedlichen Gängen konstant gehalten wird. Die Drehzahleinstellung wird dadurch eindeutig, es muß nur ein Stellorgan betätigt werden. Der Drehzahlsprung, den das Getriebe sonst beim Umschalten verursacht, wird mit ausgeregelt und beseitigt.

Figur 1 zeigt ein Spannfutter. In ein herkömmliches Bohrfutter 1 ragen Spannbacken 2. Radial zu einer Antriebswelle 8 ist eine Platte 3 angebracht, die mittels einer Feder 5 auf die Schultern der Backen 2 gedrückt wird. In die Platte 3 sind einzelne Magnete oder ein Magnetring 4 eingebracht. Ein Deckel 6 aus unmagnetischem Material, beispielsweise Kunststoff, schließt das Futter nach oben ab. Fest am Gehäuse der Bohrmaschine ist ein Eisenkern mit einer Spule 7 angebracht, wobei die Spulenanordnung im Wirkungsbereich der Magneten 4 liegen muß.

Bei sich drehendem Bohrfutter liefert der induktive Signalaufnehmer 7 eine Wechselspannung, die in Figur 2 dargestellt ist. Die Frequenz der Spannung ist allein abhängig von der Drehzahl des Bohrfutters 1. Die Höhe der Spannung ist ebenfalls abhängig von der Drehzahl aber zusätzlich auch von dem Abstand der Magneten 4 vom induktiven Signalaufnehmer 7. Die Amplitude der Spannung liefert also eine kombinierte Information über die Drehzahl und den Durchmesser des eingespannten Werkzeuges.

Der induktive Signalabnehmer ist vorteilhafterweise mit dem Spannhals des Werkzeuges fest verbunden und kann im Prinzip beliebig ausgebildet sein. Eine vorteilhafte Ausbildung ist in Figur 3a dargestellt. Der induktive Signalaufnehmer 7 ist ringförmig ausgebildet. In einen Kern 11 ist eine Spule eingelegt. Der Kern 11 weist an seiner Stirnseite Polzähne 12 auf. Diese Spule hat den Vorteil, daß sie die magnetische Energie aller Magnete gleichzeitig ausnutzt, daß sie gegen magnetische Einstreuungen, beispielsweise vom Motor, abgeschirmt ist, daß Unterschiede in den einzelnen Magneten nicht zu Schwankungen der Spannungsamplituden führen, und daß sie konzentrisch zur Welle 8 angebracht ist und damit gut in den Spindelhals integriert werden kann.

Das Bohrfutter 1 weist Spannbacken 2 auf, gegen die eine Platte 3 mittels einer Feder 5 gedrückt ist. In die Platten 3 sind wiederum Magnete 4 eingelassen. Das Bohrfutter selbst wird durch einen Deckel 6 abgeschlossen, der ebenfalls aus unmagnetischem Material ist. Aus dem Deckel 6 ragt die Antriebswelle 8 heraus.

Die Platte 3 sitzt bei diesem Ausführungsbeispiel nicht auf den Schultern der Spannbacken 2 sondern auf schrägen Flächen 9 auf der Längsseite der Backen. Beim Auf- und Zudrehen des Futters gleiten die schrägen Flächen 9 auf den Längsseiten der Backen. Hierdurch kommt eine Übersetzung zustande, so daß beispielsweise beim Öffnen des Futters die in das Futter hineinlaufenden Backen die Platte 3 nur so weit zurückdrängen, als dies der Dickenzuwachs der Backen aufgrund der Schrägflächen 9 erfordert. Die Spannbacken 2 wirken wie einseitig angeschrägte Keile. Durch eine geeignete Ausgestaltung der Spannbacken kann daher in weitem Rahmen das Übersetzungsverhältnis zwischen der Spannbacken- und der Ringbewegung geändert werden. Damit ist eine Möglichkeit gegeben, auf einfache Art und Weise den Einfluß der Spannbackenstellung im Verhältnis zum Einfluß der Drehzahl zu verändern und den Erfordernissen der Bohrmaschine anzupassen.

Statt der schrägen Flächen 9 können auch facettenartig abgestufte oder stetig gekrümmte Flächen gewählt werden. In diesem Fall ist das Verhältnis zwischen Drehzahl und Spannbackenstellung nicht konstant sondern abhängig von der Spannbackenstellung. Damit können z.B. Nichtlinearitäten des Gebersystems ausgeglichen oder auch bestimmte erwünschte Nichtlinearitäten erzeugt werden.

In Figur 4 ist eine Schaltungsanordnung für eine Regelung einer Bohrmaschine im Blockschaltbild dargestellt. Das Spannfutter 1 ist mit der Achse eines nicht dargestellten Antriebsmotors verbunden. Fest am Gehäuse des Werkzeuges ist der induktive Signalaufnehmer 7 angebracht.

Das Ausgangssignal des induktiven Signalaufnehmers führt zu einem Umschalter 36. In der gezeigten Stellung des Umschalters 36 ist das Signal mit einer Auswertschaltung 34 verbunden, die amplitudenabhängig arbeitet. Die Auswerteschaltung 34 liefert an ihrem Ausgang ein Signal, das dem eingangseitig anliegenden Spitzen- oder Mittelwert der Wechselspannung entspricht. Das Ausgangssignal der Auswerteschaltung 34 gelangt zum Istwerteingang 31 eines an sich bekannten Regelbausteines 30. Das Ausgangssignal des Regelbausteins 33 führt über eine Ausgangsleitung 33 zu einem nicht dargestellten Stellglied, beispielsweise einem Thyristor oder Triac, der auf die Spannungsversorgung des Elektromotors einwirkt.

Über einen weiteren Kontakt des Umschalters 36 ist das Ausgangssignal des induktiven Signalaufnehmers 7 auch mit einer Auswerteschaltung 35 verbindbar, an dessen Ausgang eine Größe entsprechend der Frequenz der Wechselspannung des Signalaufnehmers 7 abgegeben wird. Dieses Ausgangssignal ist ebenfalls mit dem Istwerteingang der Regelschaltung 30 verbunden. Mit dem Sollwerteingang 32 der Regelschaltung 30 ist ein weiterer Schalter 37 verbunden, der zusammen mit dem Umschalter 36 betätigbar ist. In der gezeichneten Stellung verbindet der Umschalter 37 das Signal einer Tastatur 40 mit Tasten A bis D mit dem Sollwerteingang 32. In der anderen Schalterstellung ist der Sollwerteingang mit einem Einsteller 41 verbunden, durch den eine Drehzahl vorgegeben werden kann.

In der gezeichneten Darstellung liefert der induktive Signalaufnehmer 7 das Signal an die Auswerteschaltung 34. Der Regler gleicht jetzt alle Störgrößen aus, die auf die Amplitude des Aufnehmersignals Einfluß nehmen. Das sind beispielsweise das Drehmoment, die Getriebeübersetzung und der Bohrerdurchmesser. Die Wirkungsrichtung ist dabei so, daß der Regler am Motor die Spannung erhöht, sobald die Spannung am Aufnehmer 7 absinkt. Dies ist beispielsweise der Fall, wenn das Drehmoment ansteigt, ein kleinerer Bohrer eingespannt wird oder eine Getriebestufe mit höherer Untersetzung gewählt wird.

Damit sich die richtige Drehzahl ergibt, muß ein dem Material entsprechender Sollwert am Eingang 32 eingegeben werden. Dies geschieht durch die Tastatur 40. Der Sollwert ist hier mit den Tasten A bis D bezeichnet und beispielsweise auf unterschiedliche Materialien, z.B. Holz, Stahl, Beton oder Buntmetall abgestimmt. Möglich ist auch die Eingabe der Qualität der Bohrer. Zusätzlich zu den Drehzahlen können mit den Tasten noch weitere Funktionen gesteuert werden, z.B. das Einschalten des Schlagwerks beim Drücken der Taste «Beton». Die Steuerung der Zusatzfunktionen kann rein mechanisch oder über weitere Kontakte geschehen.

Aus der Drehzahl als bisherige primäre Größe, die der Maschine vorgegeben werden mußte, wird jetzt eine sekundäre Größe, die sich aus den Arbeitsbedingungen ergibt. Insbesondere ist das Getriebe nicht mehr drehzahlbestimmend, es dient allein zur Drehmomentwandlung.

Mit der bisher beschriebenen Funktion ergibt sich beim Bohren mit dem Werkzeug eine weitgehend automatisierte Betriebsart. Insbesondere mit Universalwerkzeugen werden jedoch nicht nur Bohrungen durchgeführt, sondern auch andere Arbeiten, beispielsweise Schrauben oder Polieren erledigt. Hierzu muß die Drehzahl von der Stellung der Bohrfutterbacken unabhängig sein. Durch Umschalten der Schalter 36 und 37 erfolgt die Regelung nur auf die Drehzahl des Werkzeuges, d.h. der Spanndurchmesser der Backen bleibt ohne Einfluß und es können Werkzeuge mit beliebigem Schaft eingespannt werden. In dieser Betriebsart wird der Sollwert nicht von der Tastatur 40 geliefert, sondern von dem Einsteller 41, wie er bei herkömmlichen Bohrmaschinen bekannt ist. Der Vorteil, daß die Getriebestellung mit ausgeregelt wird, bleibt auch in dieser Betriebsart erhalten. Für eine alleinige Drehzahlregelung können die den Bohrerdurchmesser erfassenden und verarbeitenden Vorrichtungen entfallen.

Eine kostengünstige Variante des Ausführungsbeispiels nach Figur 4 ist in Figur 5 dargestellt. Die Figur zeigt wiederum das Bohrfutter 1 mit dem zugehörigen Signalaufnehmer 7. Das Ausgangssignal des Signalaufnehmers 7 führt zu dem Umschalter 36. Ein Schaltkontakt des Umschalters 36 führt zu der amplitudenabhängigen Auswerteschaltung 34, ein anderer Kontakt zu der frequenzabhängigen Auswerteschaltung 35. Die Ausgänge beider Auswerteschaltungen führen zum Istwerteingang der Regelschaltung 30. Der Ausgang des Reglers dient zur Steuerung eines Halbleiterschalters, durch den der Motor des Werkzeuges regelbar ist. Mit 50 ist ein Potentiometer gekennzeichnet, dessen Ausgangsgröße an den Sollwerteingang des Reglers 30 angeschlossen ist. Das Potentiometer 50 weist eine erste Skala 51 für die Drehzahlen und eine zweite Skala 52 für die Materialien auf.

Diese Skalen werden mit einem Schieber 53 entsprechend den Schalterstellungen des Schalters 36 abgedeckt. Beispielsweise entspricht die gezeichnete Stellung der Betriebsart, bei der der Bohrdurchmesser mit in die Regelung eingeht. Mit dem Umschalter 36 wird gleichzeitig der Schieber 53 betätigt. Durch die Anordnung nach Figur 5 wird die Tastatur und ein Kontaktsatz eingespart. Durch diese Anordnung wird vor allem die Bedienung eindeutig, in dem in der einen Betriebsart keine Drehzahlen und in der anderen Betriebsart keine Materialien eingestellt werden können. Mittels eines zusätzlichen, nicht dargestellten Kontakts oder mechanisch z.B. mittels Nocken ist es auch möglich, bei einer bestimmten Stellung des Schiebers 53 Zusatzfunktionen zu steuern. Wenn z.B. die Materialart «Beton» eingestellt ist, kann das Schlagwerk eingeschaltet werden. Ist nur eine Drehzahlregelung vorgesehen, so entfallen der Schalter 36 und die amplitudenabhängige Auswerteschaltung 34.

In Figur 6 ist ein Ausführungsbeispiel dargestellt, mit dem die verschiedenen Getriebestufen eingestellt werden können. Das Bohrfutter 1 wird über ein Getriebe 66 von einem Motor 61 angetrieben. Fest am Gehäuse des Werkzeuges ist der Signalaufnehmer 7 angebracht. Der Signalaufnehmer 7 steht mit der amplitudenabhängigen Auswerteschaltung 34 und der frequenzabhängigen Auswerteschaltung 35 in Verbindung. Der Umschalter 70 verbindet einen der Ausgänge der Auswerteschaltungen 34 oder 35 mit dem Istwerteingang des Reglers 30. An den Eingang 32 wird das Sollwertsignal angelegt. Der Ausgang des Reglers 30 ist an die Steuerelektrode eines Thyristors 71 angeschlossen. Der Thyristor 71 liegt in einer Versorgungsspannungsleitung für den Motor 61. Ein Schwellwertschalter 60 ist an den Ausgang der frequenzabhängigen Auswerteschaltung 35 angeschlossen. Die Ausgänge des Schwellwertschalters 60 sind mit Leuchten 62 und 63 verbunden. Weiterhin ist ein Stellmagnet 64 an die Anschlußleitung der Leuchte 62 und ein Stellmagnet 65 an die Anschlußleitung zur Leuchte 63 anschließbar. Ein Eingang eines Exklusiv-Oder-Gliedes 68 ist mit einem Getriebeschaltkontakt 67 im Getriebe 66 verbunden. Ein weiterer Eingang des Exklusiv-Oder-Gliedes 68 führt zur Anschlußleitung der Leuchte 62. Der Ausgang des Exklusiv-Oder-Gliedes 68 steht mit einer Leuchte 69 in Verbindung.

Aus den Drehzahlsignalen des induktiven Signalaufnehmers läßt sich ein Signal gewinnen, das die erforderliche Getriebestufe z.B. für eine Zweigang-Bohrmaschine mittels Leuchten anzeigt oder selbständig schaltet. Die Schaltschwelle, die durch den Schwellwertschalter 60 festgelegt wird, entspricht einem Umschaltpunkt im Drehzahlbereich der Maschine. Die Wirkungsweise dieser Schaltungsanordnung soll näher anhand der Figur 7 erläutert werden.

In Figur 7 ist mit ΔU der Stellbereich des Reglers 30 benannt, der eine entsprechende Spannung an den Motor 61 liefert. Mit Δn ist der Drehzahlbereich der Maschine im Leerlauf gekennzeichnet. Der Umschaltpunkt UP ergibt sich im wesentlichen aus den Übersetzungen der Gänge 1 und 2 des Getriebes 66 und dem Stellbereich des Reglers 30. Der Umschaltpunkt UP wird zweckmäßigerweise in die Mitte des mit gestrichelten Linien gekennzeichneten Überlappungsbereiches der beiden Gänge gelegt.

Die Anzeige der Getriebeumschaltung funktioniert unabhängig von der Stellung des Bohrfutters mit Hilfe des drehzahlabhängigen Signals am Ausgang der Auswerteschaltung 35. Sinkt die Drehzahl unter einen vorgegebenen Wert ab, so wird beispielsweise durch die Diode 62 angezeigt, daß der erste Gang einzulegen ist. Ist die Drehzahl des Umschaltpunktes überschritten, so wird durch die Leuchtdiode 63 angezeigt, daß der zweite Gang einzulegen ist. Mittels der Stellmagnete 64 und 65 ist dieser Vorgang zu automatisieren, in dem durch die Magnete 64 und 65 das Getriebe direkt betätigt wird.

Eine Vereinfachung der Anzeige wird erreicht, in dem der Sollzustand des Getriebes mit seinem Istzustand verglichen wird. Dazu wird mit der Getriebeumschaltung der Schalter 67 betätigt, der an seinem Ausgang im ersten Gang beispielsweise eine 1 liefert und im zweiten Gang eine Null. Dieses Signal wird durch das Gatter 68 mit dem Signal des Schwellwertschalters 60 auf Übereinstimmung überprüft, und zwar so, daß am Ausgang des Gatters 68 eine logische Eins nur dann erscheint, wenn die Eingangssignale nicht übereinstimmen. Die Anzeige 69 leuchtet dann nur auf, wenn das Getriebe umgeschaltet werden muß. Diese Vereinfachung trägt vor allem zur Eindeutigkeit der Bedienung bei, da bei bereits richtiger Getriebeeinstellung keine Anzeige erscheint.

## Patentansprüche

1. Elektrisch betriebene Bohrmaschine mit einer Regeleinrichtung zur Regelung des Antriebs der Bohrmaschine, einem umschaltbaren Getriebe, einem dem Getriebe nachgeschalteten Spannfutter und einem Signalaufnehmer, dadurch gekennzeichnet, daß der Signalaufnehmer (7) die Drehzahl an der Achse (8) abgreift, die nach dem schaltbaren Teil des Getriebes (66) auf dessen Abtriebsseite liegt und sein drehzahlabhängiges Ausgangssignal über eine Auswerteschaltung (34, 35) der Regelvorrichtung (30) führt.

2. Elektrisch betriebene Bohrmaschine nach Anspruch 1, dadurch gekennzeichnet, daß der Signalgeber (4) im oder am Spannfutter (1) angeordnet ist und daß der Signalaufnehmer (7) im oder am Gehäuse der Bohrmaschine im Bereich des Spannfutters (1) angebracht ist.

3. Elektrisch betriebene Bohrmaschine nach einem der vorhergehenden Ansprüche, dadurch gekennzeichnet, daß der Signalgeber (4) an einem Kupplungsstück auf der Abtriebsseite der Bohrmaschine angeordnet ist.

4. Elektrisch betriebene Bohrmaschine nach einem der vorhergehenden Ansprüche, dadurch gekennzeichnet, daß der Signalaufnehmer (7) induktiv ausgebildet ist.

5. Elektrisch betriebene Bohrmaschine nach einem der vorhergehenden Ansprüche, dadurch gekennzeichnet, daß der Signalgeber (4) Dauermagnete enthält, die im Spannfutter (1) des Werkzeuges oder des Kupplungsstückes ringförmig angeordnet sind und daß der Signalaufnehmer feststehend am Gehäuse angebracht ist.

6. Elektrisch betriebene Bohrmaschine nach einem der vorhergehenden Ansprüche, dadurch gekennzeichnet, daß der Signalgeber (4) aus einem Segmente aufweisenden Metallring gebildet ist, der im Spannfutter (1) des Werkzeuges und/oder zur Abtriebswelle des Kupplungsstückes konzentrisch angeordnet ist und daß der Signalaufnehmer (7) feststehend am Gehäuse angebracht ist.

7. Elektrisch betriebene Bohrmaschine nach einem der vorhergehenden Ansprüche, dadurch gekennzeichnet, daß der Signalaufnehmer (7) ringförmig ausgebildet ist, wobei die Spule von einem Kern (11) umschlossen ist, der Polzähne aufweist.

8. Elektrisch betriebene Bohrmaschine nach einem der vorhergehenden Ansprüche, dadurch gekennzeichnet, daß das Ausgangssignal des Signalaufnehmers (7) einer frequenzabhängigen Auswerteschaltung (35) und deren Ausgangssignal an den Istwerteingang (31) der Regelvorrichtung (30) zugeführt ist.

9. Elektrisch betriebene Bohrmaschine nach einem der vorhergehenden Ansprüche, dadurch gekennzeichnet, daß Einrichtungen (40, 41; 50 bis 53) vorgesehen sind, mit denen drehzahlbestimmende Sollwerte vorgebbar sind.

10. Elektrisch betriebene Bohrmaschine nach einem der vorhergehenden Ansprüche, dadurch gekennzeichnet, daß in Abhängigkeit von der Drehzahl ein Gangwechsel anzeigbar oder steuerbar ist.

11. Elektrisch betriebene Bohrmaschine nach einem der vorhergehenden Ansprüche, dadurch gekennzeichnet, daß die Drehzahlregelung durch eine vom Durchmesser des eingespannten Werkzeugs bestimmte Regelung überlagert ist.

**Claims**

1. Electrically driven drilling machine having a control device to control the drive of the drilling machine, a change-speed gear, a chuck following the gear unit and a signal receiver, characterized in that the signal receiver (7) taps the speed at the shaft (8) which is located after the shiftable part of the gear unit (66) on its output side and feeds its speed-sensitive output signal through an evaluation circuit (34, 35) to the control device (30).

2. Electrically driven drilling machine according to Claim 1, characterized in that the signal transducer (4) is arranged in or on the chuck (1) and that the signal receiver (7) is provided in or on the housing of the drilling machine in the region of the chuck (1).

3. Electrically driven drilling machine according to one of the preceding claims, characterized in that the signal transducer (4) is arranged on a coupling element on the output side of the drilling machine.

4. Electrically driven drilling machine according to one of the preceding claims, characterized in that the signal receiver (7) is of inductive construction.

5. Electrically driven drilling machine according to one of the preceding claims, characterized in that the signal transducer (4) contains permanent magnets which are arranged annularly in the chuck (1) of the tool or of the coupling element, and that the signal receiver is provided stationary on the housing.

6. Electrically driven drilling machine according to one of the preceding claims, characterized in that the signal transducer (4) is formed by a metal ring exhibiting segments which is arranged in the chuck (1) of the tool and/or concentrically to the output shaft of the coupling element and that the signal receiver (7) is provided stationary on the housing.

7. Electrically driven drilling machine according to one of the preceding claims, characterized in that the signal receiver (7) is of annular construction, the coil being enclosed by a core (11) which exhibits pole teeth.

8. Electrically driven drilling machine according to one of the preceding claims, characterized in that the output signal of the signal receiver (7) is fed to a frequency-sensitive evaluation circuit (35) and the output signal of the latter is fed to the actual value input (31) of the control device (30).

9. Electrically driven drilling machine according to one of the preceding claims, characterized in that devices (40, 41; 50 to 53) are provided by which speed-determining desired values are prescribable.

10. Electrically driven drilling machine according to one of the preceding claims, characterized in that a gear speed change can be indicated or controlled as a function of the rotational speed.

11. Electrically driven drilling machine according to one of the preceding claims, characterized in that a control determined by the diameter of the clamped tool is superimposed upon the speed control.

**Revendications**

1. Perceuse actionnée électriquement, avec un dispositif de réglage assurant la régulation de l'entraînement de la perceuse, avec un mécanisme de transmission commutable, un mandrin de serrage monté à la suite de ce mécanisme et un capteur de signaux, perceuse caractérisée en ce que le capteur de signaux (7) capte la vitesse de rotation sur l'axe (8), qui se situe après la partie commutable du mécanisme de transmission (66) sur le côté sortie de celui-ci, et ce capteur transmet son signal de sortie, dépendant de la vitesse de rotation, au dispositif de réglage (30) par l'intermédiaire d'un circuit d'exploitation (34, 35).

2. Perceuse actionnée électriquement selon la revendication 1, caractérisée en ce que l'émetteur de signaux (4) est disposé dans ou sur le mandrin de serrage (1) et que le capteur de signaux (7) est monté dans ou sur le boîtier de la perceuse, au voisinage du mandrin de serrage (1).

3. Perceuse actionnée électriquement selon l'une des précédentes revendications, caractérisée en ce que l'émetteur de signaux (4) est disposé sur une pièce d'accouplement du côté sortie de la perceuse.

4. Perceuse actionnée électriquement selon l'une des précédentes revendications, caractérisée en ce que le capteur de signaux (7) est un capteur inductif.

5. Perceuse actionnée électriquement selon une des précédentes revendications, caractérisée en ce que l'émetteur de signaux (4) comprend des aimants permanents, qui sont disposés circulairement dans le mandrin de serrage (1) de l'outil ou de la pièce d'accouplement, tandis que le capteur de signaux (7) est monté à poste fixe sur le boîtier.

6. Perceuse actionnée électriquement selon l'une des précédentes revendications, caractérisée en ce que l'émetteur de signaux (4) est constitué par un anneau métallique comportant des segments, qui est disposé concentriquement dans le mandrin de serrage (1) de l'outil et/ou par rapport à l'arbre de sortie de la pièce d'accouplement, tandis que le capteur de signaux (7) est monté à poste fixe sur le boîtier.

7. Perceuse actionnée électriquement selon l'une des précédentes revendications, caractérisée en ce que le capteur de signaux (7) est de forme annulaire, la bobine étant entourée par un noyau (11) comportant des dents polaires.

8. Perceuse actionnée électriquement selon l'une des précédentes revendications, caractérisée en ce que le signal de sortie du capteur de signaux (7) est appliqué à un circuit (35) d'exploitation en fonction de la fréquence, et le signal de sortie de ce circuit est appliqué à l'entrée de valeur réelle (31) du dispositif de réglage (30).

9. Perceuse actionnée électriquement selon l'une des précédentes revendications, caractérisée en ce qu'il est prévu des dispositifs (40, 41; 50 à 53), grâce auxquels des valeurs de consigne, déterminant la vitesse de rotation, peuvent être prédéfinies.

10. Perceuse actionnée électriquement selon l'une des précédentes revendications, caractérisée en ce qu'en fonction de la vitesse de rotation, un changement de vitesse peut être affiché ou commandé.

11. Perceuse actionnée électriquement selon l'une des précédentes revendications, caractérisée en ce qu'à la régulation de la vitesse de rotation est superposée une régulation déterminée par le diamètre de l'outil serré dans le mandrin.

FIG.1

FIG.2

FIG.3B

FIG.3A

EP 0 100 435 B1

FIG.4

FIG.5

13

FIG.6

FIG.7